# NEUE EUROPÄISCHE PATENTSCHRIFT

(11) **EP 1 737 708 B2**
(45) Veröffentlichungstag und Bekanntmachung des Hinweises auf die Entscheidung über den Einspruch: **06.01.2010**
(45) Hinweis auf die Patenterteilung: 11.07.2007
(21) Anmeldenummer: 06705948.5
(22) Anmeldetag: 07.02.2006
(51) Int. Cl.: B60R 21/16, B60R 21/20

(54) **AIRBAGMODUL MIT GASGENERATOR UND GASSACK**
AIRBAG MODULE COMPRISING A GAS GENERATOR AND AN AIRBAG
MODULE D'AIRBAG COMPORTANT UN GENERATEUR DE GAZ ET UN SAC DE GAZ

(30) Priorität: 09.02.2005 DE 202005002329 U
(43) Veröffentlichungstag der Anmeldung: 03.01.2007
(73) Patentinhaber: Takata-Petri AG, 63743 Aschaffenburg (DE)
(72) Erfinder: GLAAB, Ralf, 63829 Krombach (DE)
(74) Vertreter: Baumgärtel, Gunnar
(86) Internationale Anmeldenummer: PCT/DE2006/000229
(87) Internationale Veröffentlichungsnummer: WO 2006/084449

(56) Entgegenhaltungen:
- EP-A- 1 359 064
- EP-B- 0 633 168
- DE-A1- 10 332 594
- DE-A1- 19 510 383
- DE-U1-202004 000 170
- DE-U1-202004 010 785
- US-A- 3 799 575
- US-A- 3 810 654
- US-A- 5 632 506
- US-A1- 2004 183 282

## Beschreibung

Die Erfindung betrifft ein Airbagmodul mit Gasgenerator und Gassack nach dem Oberbegriff des Anspruchs 1.

Es ist bei Airbagmodulen bekannt, den Gasgenerator innerhalb des Gassacks anzuordnen. So ist aus der EP 0 633 168 B1 ein Airbagmodul bekannt, bei dem ein Rohrgasgenerator im Gassack in einer Tasche vorgesehen ist, die an ihrem unteren Ende eine Öffnung in Form von sich labyrinthartig überdeckenden, an den Seitenkanten vernähten Lappen aufweist. An den Stirnseiten weist die Tasche Verstärkungen auf. Die Verstärkung an einer Stirnseite weist eine Öffnung mit einem Querschnitt auf, der etwa dem Querschnitt des Rohrgasgenerators entspricht. Diese Öffnung wird durch einen Flansch am Rohrgasgenerator nach dessen Montage dicht verschlossen. Die Verstärkung an der anderen Stirnseite weist eine Öffnung mit einem Querschnitt auf, der etwa dem Querschnitt eines Befestigungsbolzens am Rohrgasgenerator entspricht. Diese Öffnung wird nach dessen Montage durch eine Mutter mit Dichtring verschlossen. Das elektrische Anschlusskabel des Rohrgasgenerators wird an dessen Flanschseite aus dem Gassack herausgeführt. Der Nachteil dieser Anordnung besteht darin, dass die Befestigung und Abdeckung auf der Flanschseite aufwendig ist und zu einem hohen Material- und Montageaufwand führt.

Aus der DE 195 10 383 A1 ist eine Airbageinrichtung bekannt, bei der ein Gassack eine Hauptöffnung hat, die die Einführung eines Gasgenerators in diesen ermöglicht und eine Nebenöffnung, durch die hindurch eine elektrische Verbindung zwischen dem Gasgenerator und einer Energiequelle ermöglicht ist. Dabei wirkt die Hauptöffnung als Entlüftungsloch, um das vom Gasgenerator erzeugte Gas aus dem Airbag austreten zu lassen. Diese Hauptöffnung ist seitlich in einem Unterteil des Gassacks vorgesehen. Die Nebenöffnung ist zentral im Unterteil des Gassacks vorgesehen. An dieser Stelle ist der Gasgenerator an einer Grundplatte befestigt.

Der Nachteil dieser Anordnung besteht darin, dass zwei Öffnungen für den Gasgenerator im Gassack vorhanden sind, wobei die eine der Einführung des Gasgenerators dient und die zweite für das Herausführen der elektrischen Verbindung vorgesehen ist.

Ein Airbagmodul mit den Merkmalen des Oberbegriffs des Anspruchs 1 ist aus den Figuren 5 bis 7 der DE 20 2004 000 170 U1 bekannt.

Der Erfindung liegt die Aufgabe zugrunde, den Aufbau des Airbagmoduls zu vereinfachen.

Erfindungsgemäß wird das gemäß den Merkmalen des Anspruchs 1 erreicht. Bei einem Airbagmodul mit Gasgenerator, der einen elektrischen Anschluss aufweist, und mit einem Gassack, der eine Gasgeneratoröffnung zur Einführung des Gasgenerators in den Gassack aufweist, wobei die Gasgeneratoröffnung durch mindestens ein Gewebeteil abdichtbar ist, sind der Gasgenerator und sein elektrischer Anschluss im Bereich der Gasgeneratoröffnung angeordnet und das mindestens eine Gewebeteil ist so angeordnet und ausgebildet, dass die Abdichtung der Gasgeneratoröffnung durch das mindestens eine Gewebeteil während oder nach der Gassackentfaltung im Bereich des Gasgenerators und/oder am elektrischen Anschluss erfolgt.

Bei dieser Anordnung besteht der Vorteil, dass keine besondere Öffnung für das Herausführen des elektrischen Anschlusses des Gasgenerators aus dem Gassack erforderlich ist. Ein weiterer Vorteil besteht darin, dass die Gasgeneratoröffnung nur durch ein Gewebeteil des Gassacks abgedichtet wird, und dass hierfür kein Flansch oder eine dichte Verschraubung erforderlich ist.

Ferner ist vorgesehen, dass der Gasgenerator bei gefaltetem Gassack in der Gasgeneratoröffnung angeordnet ist und mit einem Abschnitt aus dem Gassack herausragt, dass der elektrische Anschluss des Gasgenerators an einem außerhalb des Gassacks liegenden Abschnitt des Gasgenerators vorgesehen ist und dass das mindestens eine die Gasgeneratoröffnung abdeckende Gewebeteil so ausgebildet ist, dass es die Gasgeneratoröffnung während oder nach Entfaltung des Gassacks hinter dem Gasgenerator schließt, so dass der Gasgenerator komplett im Gassack liegt.

Dem nach ragt also der Gasgenerator mit dem elektrischen Anschluss vor der Entfaltung des Gassacks aus diesem heraus. Erst während der Entfaltung des Gassacks wird der Gassack nach außen gedrückt, bis der Gasgenerator vollständig im Gassack liegt. Während oder nach der Entfaltung des Gassacks schließt dann das Gewebeteil die Gasgeneratoröffnung hinter dem Gasgenerator.

Die Abdichtung der Gasgeneratoröffnung kann erfolgen, indem das mindestens eine die Gasgeneratoröffnung abdeckende Gewebeteil so ausgebildet ist, dass es während und /oder nach der Entfaltung des Gassacks am elektrischen Anschluss anliegt. Das Gewebeteil bleibt bei dieser Ausführung durch den elektrischen Anschluss verformt.

In einer anderen Ausführungsform ist vorgesehen, dass der Gassack im Bereich der Gasgeneratoröffnung und /oder ein Anschlussstecker für die Verbindung eines Anschlusskabels mit dem Gasgenerator so ausgebildet ist, dass der Anschlussstecker während der Entfaltung des Gassacks vom Gasgenerator getrennt wird, so dass das mindestens eine abdeckende Gewebeteil den Gassack ohne ein dazwischen liegendes Bauteil schließt. In diesem Fall ist das Gewebeteil nach der Entfaltung des Gassacks unverformt, d.h. es nimmt die ursprünglich genähte Lage wieder ein.

Eine Möglichkeit zur Realisierung dieser Ausführungsform besteht darin, dass der Anschlussstecker so ausgebildet ist, dass er über den Durchmesser des Gasgenerators hinausragt und dass der Gassack im Bereich der Gasgeneratoröffnung, deren Durchmesser etwa dem Durchmesser des Gasgenerators entspricht, eine ringförmige Verstärkung aufweist. Bei der Entfaltung des Gassacks wird der Rand der Gasgeneratoröffnung gegen den über den Gasgenerator hinausragenden Abschnitt des Anschlusssteckers gedrückt und wegen der Verstärkung ist der sich entfaltende Gassack in der Lage, den Anschlussstecker aus dem Gasgenerator herauszudrücken.

Es ist zweckmäßig, dass zwei sich überlappende, die Gasgeneratoröffnung abdeckende Gewebeteile vorgesehen sind. Das ist dann besonders vorteilhaft, wenn die Gewebeteile die Gasgeneratoröffnung am elektrischen Anschluss abdecken sollen. In diesem Fall wird der Anschluss von beiden Gewebeteilen allseitig umschlossen.

Die erfindungsgemäße Anordnung ist dann besonders vorteilhaft anwendbar, wenn als Gasgenerator ein Rohrgasgenerator vorgesehen ist, der den elektrischen Anschluss an einer Stirnseite aufweist..

Die Erfindung soll in Ausführungsbeispielen an Hand von Zeichnungen erläutert werden. Es zeigen:
- Fig. 1: einen Schnitt durch einen gefalteten Gassack mit einem Gewebeteil zur Abdeckung der Gasgeneratoröffnung;
- Fig. 2: die Ansicht A der Gassackanordnung nach Fig. 1;
- Fig.3: den Gassack nach Fig. 1 nach Entfaltung des Gassacks;
- Fig. 4: die Ansicht B der Gassackanordnung nach Fig. 3;
- Fig. 5: einen Schnitt durch einen gefalteten Gassack mit zwei Gewebeteilen zur Abdeckung der Gasgeneratoröffnung in einer ersten Ausführungsform;
- Fig. 6: die Ansicht C der Gassackanordnung nach Fig. 5;
- Fig. 7: den Gassack nach Fig. 5 nach Entfaltung des Gassacks;
- Fig. 8: die Ansicht D der Gassackanordnung nach Fig. 7;
- Fig. 9: einen Schnitt durch einen gefalteten Gassack mit zwei Gewebeteilen zur Abdeckung der Gasgeneratoröffnung nicht nach der Erfindung;
- Fig. 10: die Ansicht E der Gassackanordnung nach Fig. 9.

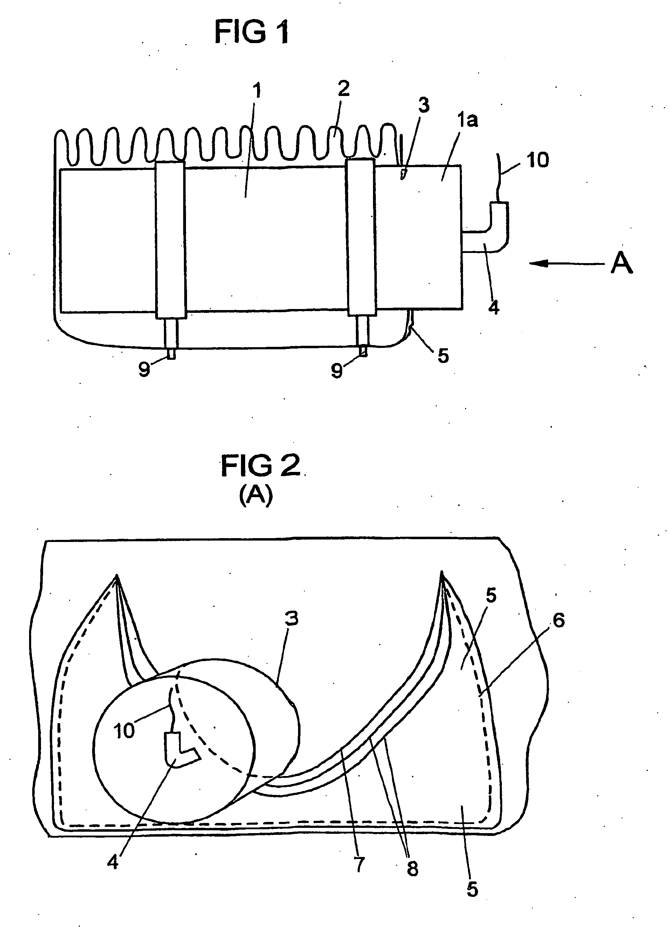

Bei der Anordnung der Fig. 1 ist ein Ausschnitt aus einem Airbagmodul dargestellt. Ein Rohrgasgenerator 1 ist in einem Gassack 2 so angeordnet, dass er durch eine Gasgeneratoröffnung 3 aus dem Gassack 2 herausragt. An der Stirnseite des aus dem Gassack 2 ragenden Abschnitts 1a des Rohrgasgenerators 1 ist ein elektrischer Anschluss in Form eines Gerätesteckers 4 und eines Anschlusskabels 10 vorgesehen. Im Bereich der Gasgeneratoröffnung 3 ist außen am Gassack 2 ein Gewebeteil 5 vorgesehen, das die Gasgeneratoröffnung 3 nach der Entfaltung des Gassacks 2 verschließen soll. Das Gewebeteil 5 kann auch innen am Gassack befestigt sein. Die Fig. 1 zeigt den Gassack 2 in gefalteter Lage. Wie insbesondere aus der Fig. 2 ersichtlich ist, ist das Gewebeteil 5 unten und seitlich durch Nähte 6 mit dem Gassack verbunden. Wie weiterhin aus der Fig. 2 ersichtlich ist, wird die nicht mit dem Gassack 2 verbundene Oberkante 7 des Gewebeteils 5 bei der Montage des Rohrgasgenerators nach unten gedrückt und liegt nach dessen Montage an dessen Unterseite an, wobei das Gewebeteil 5 Falten 8 bildet. Der Rohrgasgenerator ist in an sich bekannter Weise mittels Bolzen 9, die unten aus dem Gassack 2 herausragen, an einer nicht dargestellten Halterung im Airbagmodul befestigt.

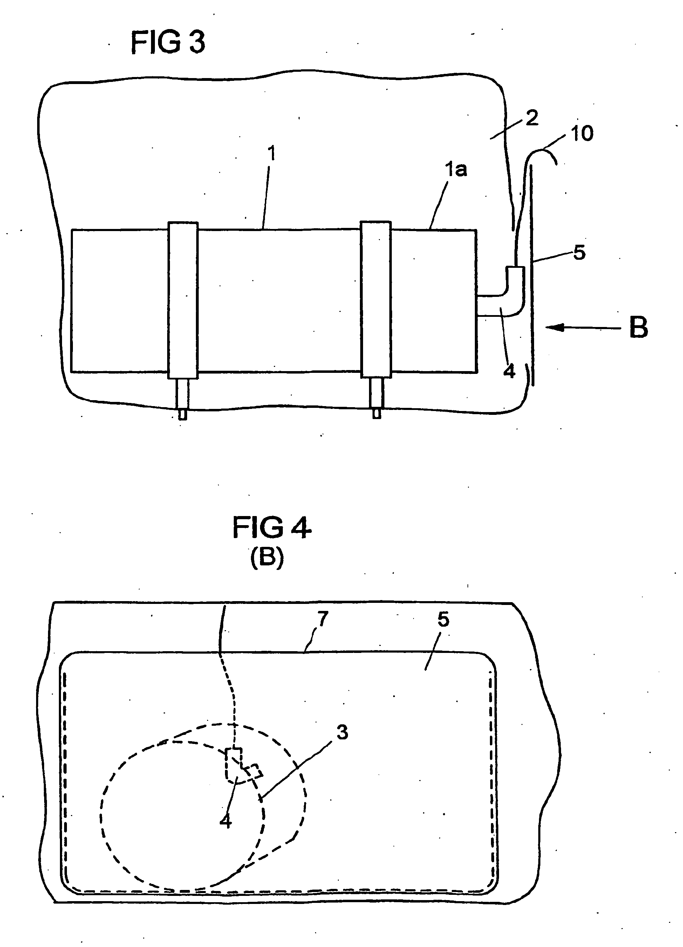

Bei der Entfaltung des Gassacks 2 wird dieser über den vorher aus ihm herausragenden Abschnitt 1a des Rohrgasgenerators 1 und über den Gerätestecker 4 geschoben, wie es aus der Fig. 3 ersichtlich ist. Die vorher durch den Rohrgasgenerator 1 nach unten gedrückte Oberkante 7 des Gewebeteils 5 wird nun in ihre Ausgangslage gedrückt und das Gewebeteil 5 verschließt die Gasgeneratoröffnung 3, wie es aus Fig. 4 ersichtlich ist. Lediglich das mit dem Gerätestecker 4 verbundene Anschlusskabel 10 verläuft zwischen dem Gassack 1 und dem Gewebeteil 5 nach außen. Infolge des Druckes im Gassack 2 bei dessen Entfaltung wird das Anschlusskabel 10 zwischen diesem und dem Gewebeteil 5 eingeklemmt und dessen Austrittsstelle wird zumindest nahezu gasdicht verschlossen. In der Fig.3 sind der Gassack 2 und das Gewebeteil 5 der Anschaulichkeit wegen mit Abstand dargestellt.

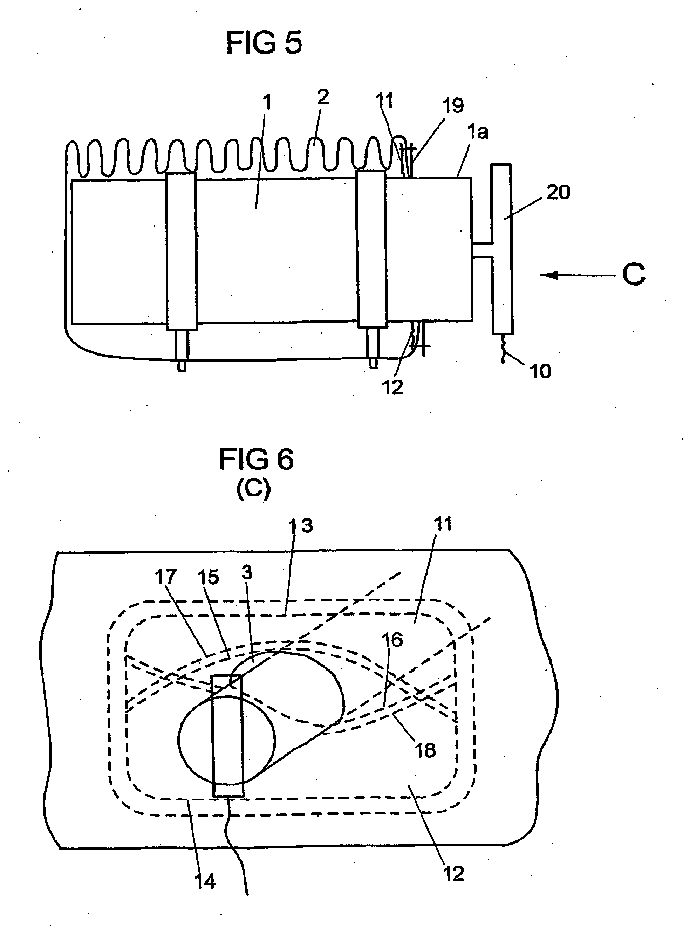

Beim Ausführungsbeispiel der Fig. 5 ragt ebenfalls ein Abschnitt 1a des Rohrgasgenerators 1 in gefalteter Lage des Gassacks 2 aus diesem heraus. Bei dieser Ausführungsform sind zwei Gewebeteile für das Verschließen der Gasgeneratoröffnung 3 vorgesehen. Diese Gewebeteile sind innen am Gassack befestigt. Dabei ist ein oberes Gewebeteil 11 oben und seitlich durch Nähte 13 mit dem Gassack verbunden, während ein unteres Gewebeteil 12 unten und seitlich durch Nähte 14 mit dem Gassack verbunden ist. Die Unterkante 15 des Gewebeteils 11 und die Oberkante 16 des Gewebeteils 12 sind nicht mit dem Gassack 2 verbunden, so dass zwischen diesen der Rohrgasgenerator 1 in den Gassack geschoben werden kann. Beide Gewebeteile überlappen sich wie aus den Figuren 6 bis 8 erkennbar ist. Beim Einschieben des Rohrgasgenerators 1 in den Gassack 2 bilden sich deshalb Falten 17 am oberen Gewebeteil 11 und Falten 18 am unteren Gewebeteil 12, wie aus Fig. 6 ersichtlich ist.

Der Gassack 2 weist bei dieser Ausführungsform im Bereich der Gasgeneratoröffnung 3 eine ringförmige Verstärkung 19 auf, die außen auf den Gassack 2 aufgebracht ist. Dieser Verstärkung 19 ist ein Gerätestecker 20 zugeordnet, der über den Gasgenerator hinausragt, wie es aus Fig. 5 erkennbar ist.

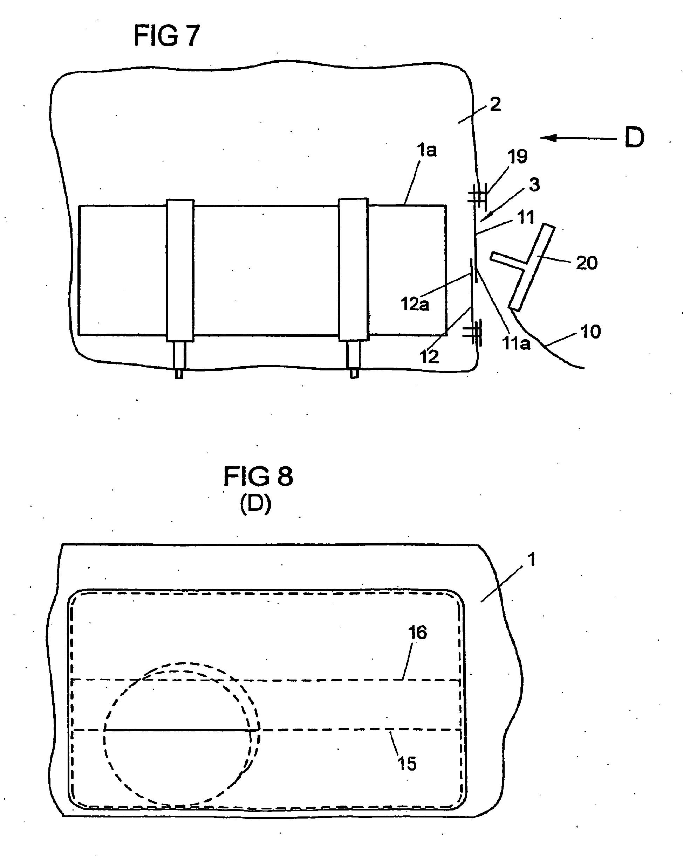

Bei Entfaltung des Gassacks 2 wird dieser über den vorher aus diesem herausragenden Abschnitt 1a des Gasgenerators 1 geschoben wie es aus der Fig. 7 ersichtlich ist. Mittels der Verstärkung 19 wird weiterhin der Gerätestecker 20 aus dem Rohrgasgenerator 1 gedrückt. Dadurch können die vorher durch den Rohrgasgenerator nach oben bzw. unten gedrückten Kanten 15, 16 der Gewebeteile 11, 12 in ihre Ausgangslage zurückkehren und die Gasgeneratoröffnung 3 verschließen, wie es aus den Figuren 7 und 8 erkennbar ist. Infolge des erhöhten Drucks im Gassack 2 bei dessen Entfaltung wird der überlappende Abschnitt 12a des Gewebeteils 12 gegen den überlappenden Abschnitt 11a des Gewebeteils 11 gedrückt, so dass der Gassack 2 zumindest nahezu gasdicht verschlossen wird.

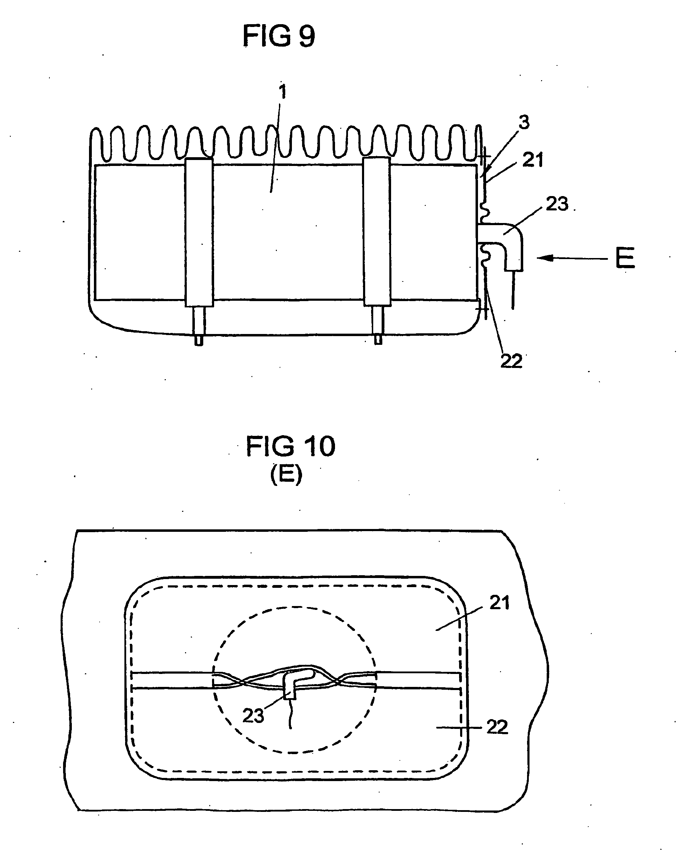

Bei den Figuren 9 und 10 sind wie bei der vorhergehenden Ausführungsform ein oberes Gewebeteil 21 und ein unteres Gewebeteil 22 vorgesehen, die sich überlappen. Der Gasgenerator ist hierbei in der gefalteten Lage des Gassacks 2 komplett im Gassack angeordnet. Lediglich der Gerätestecker 23 ragt aus der Gasgeneratoröffnung 3 und die sich überlappenden Abschnitte der Gewebeteile 21 und 22 liegen am Gerätestecker 23 an. Die Figuren 9 und 10 zeigen den Gassack in gefalteter Lage.

Bei Entfaltung des Gassacks 2 legen sich die überlappenden Abschnitte der Gewebeteile 21 und 22 eng an den Gerätestecker 23 an, so dass der Gassack zumindest nahezu gasdicht verschlossen wird. Auf eine gesonderte Darstellung dieser Lage der Gewebeteile wurde verzichtet, da sie im wesentlichen der in den Figuren 9 und 10 dargestellten Lage entspricht, wobei die Gewebeteile 21 und 22 enger am Gerätestecker 23 anliegen.

Bei allen dargestellten Ausführungsformen besteht der Vorteil, dass die Gasgeneratoröffnung sowohl zum Einbringen des Gasgenerators in den Gassack als auch zum Herausführen des elektrischen Anschlusse genutzt wird.

## Patentansprüche

1. Airbagmodul mit Gasgenerator (1), der einen elektrischen Anschluss (4, 10, 20) aufweist und mit einem Gassack (2), der eine Gasgeneratoröffnung (3) zur Einführung des Gasgenerators (1) in den Gassack (2) aufweist, wobei die Gasgeneratoröffnung (3) durch mindestens ein Gewebeteil (5, 11, 12) abdichtbar ist, wobei der Gasgenerator (1) und sein elektrischer Anschluss (4, 10, 20) im Bereich der Gasgeneratoröffnung (3) angeordnet sind und wobei das mindestens eine Gewebeteil (5, 11, 12) so angeordnet und ausgebildet ist, dass die Abdichtung der Gasgeneratoröffnung (3) durch das mindestens eine Gewebeteil (5, 11, 12) während und/oder nach der Gassackentfaltung im Bereich des Gasgenerators (1) und/oder am elektrischen Anschluss (4, 10, 20) erfolgt,
wobei der Gasgenerator (1) bei gefaltetem Gassack (2) in der Gasgeneratoröffnung (3) angeordnet ist und mit einem Abschnitt (1a) aus dem Gassack (2) herausragt und der elektrische Anschluss (4, 10, 20) des Gasgenerators (1) an dem außerhalb des Gassacks (2) liegenden Abschnitt (1a) des Gasgenerators (1) vorgesehen ist, **dadurch gekennzeichnet, dass** das mindestens eine die Gasgeneratoröffnung (3) abdeckende Gewebeteil (5, 11, 12) so ausgebildet ist, dass es die Gasgeneratoröffnung (3) während und/oder nach Entfaltung des Gassacks (2) hinter dem Gasgenerator (1) schließt, so dass der Gasgenerator (1) komplett im Gassack (2) liegt.

2. Airbagmodul nach Anspruch 1, **dadurch gekennzeichnet, dass** das mindestens eine die Gasgeneratoröffnung (3) abdeckende Gewebeteil so ausgebildet ist, dass es während und /oder nach der Entfaltung des Gassacks (2) am elektrischen Anschluss anliegt.

3. Airbagmodul nach Anspruch 1 oder 2, **dadurch gekennzeichnet, dass** der Gassack (2) im Bereich der Gasgeneratoröffnung (3) und /oder ein Anschlussstecker (20) für die Verbindung eines Anschlusskabels (10) mit dem Gasgenerator (1) so ausgebildet sind, dass der Anschlussstecker (20) während der Entfaltung des Gassacks (2) vom Gasgenerator (1) getrennt wird, so dass das mindestens eine abdeckende Gewebeteil (15, 16) den Gassack (2) ohne ein dazwischen liegendes Bauteil schließt.

4. Airbagmodul nach Anspruch 3, **dadurch gekennzeichnet, dass** der Anschlussstecker (20) so ausgebildet ist, dass er über den Durchmesser des Gasgenerators (2) hinausragt und dass der Gassack (2) im Bereich der Gasgeneratoröffnung (3) eine ringförmige Verstärkung (19) aufweist.

5. Airbagmodul nach mindestens einem der vorhergehenden Ansprüche, **dadurch gekennzeichnet, dass** zwei sich überlappende, die Gasgeneratoröffnung (3) abdeckende Gewebeteile (11,12) vorgesehen sind.

6. Airbagmodul nach mindestens einem der vorhergehenden Ansprüche, **dadurch gekennzeichnet, dass** als Gasgenerator ein Rohrgasgenerator (1) vorgesehen ist, der den elektrischen Anschluss (4, 10, 20) an einer Stirnseite aufweist.

## Claims

1. An airbag module comprising a gas generator (1) which has an electrical connection (4, 10, 20) and comprising an airbag (2) which has a gas generator opening (3) for introducing the gas generator (1) into the airbag (2), the gas generator opening (3) being able to be sealed by at least one fabric part(5, 11, 12), wherein the gas generator (1) and its electrical connection (4, 10, 20) are arranged in the region of the gas generator opening (3), and wherein the at least one fabric part (5, 11, 12) is arranged and designed in such a manner that the sealing of the gas generator opening (3) by the at least one fabric part (5, 11, 12) takes place in the region of the gas generator (1) and/or on the electrical connection (4, 10, 20) during and/or after the deployment of the airbag, wherein the gas generator (1) is arranged, with the airbag (2) folded, in the gas generator opening (3) and protrudes with one section (1a) out of the airbag (2), and the electrical connection (4, 10, 20) of the gas generator (1) is provided on that section (1a) of the gas generator (1) which is situated outside the airbag (2),
**characterized in that**
the at least one fabric part (5, 11, 12) covering the gas generator opening (3) is designed in such a manner that it closes the gas generator opening (3) behind the gas generator (1) during and/or after deployment of the airbag (2), so that the gas generator (1) lies entirely in the airbag (2).

2. The airbag module as claimed in claim 1, **characterized in that** the at least one fabric part covering the gas generator opening (3) is designed in such a manner that it bears against the electrical connection during and/or after the deployment of the airbag (2).

3. The airbag module as claimed in claim 1 or 2, **characterized in that** the airbag (2) in the region of the gas generator opening (3) and/or a cable connector (20) for connecting a connecting cable (10) to the gas generator (1) is/are designed in such a manner that the cable connector (20) is separated from the gas generator (1) during the deployment of the airbag (2), so that the at least one covering fabric part (15, 16) closes the airbag (2) without a component situated in-between.

4. The airbag module as claimed in claim 3, **characterized in that** the cable connector (20) is designed in such a manner that it protrudes over the diameter of the gas generator (2), and **in that** the airbag (2) has an annular reinforcement (19) in the region of the gas generator opening (3).

5. The airbag module as claimed in at least one of the preceding claims, **characterized in that** two overlapping fabric parts (11, 12) covering the gas generator opening (3) are provided.

6. The airbag module as claimed in at least one of the preceding claims, **characterized in that** a tubular gas generator (1) which has the electrical connection (4, 10, 20) on an end side is provided as the gas generator.

## Revendications

1. Module d'airbag, comportant un générateur de gaz (1) présentant une connexion électrique (4, 10, 20) et un sac de gaz (2) présentant une ouverture pour générateur de gaz (3) destinée à l'introduction du générateur de gaz (1) dans le sac de gaz (2), l'ouverture pour générateur de gaz (3) pouvant être obturée par au moins un élément tissé (5, 11, 12), le générateur de gaz (1) et sa connexion électrique (4, 10, 20) étant disposés au niveau de l'ouverture pour générateur de gaz (3) et l'au moins un élément tissé (5, 11, 12) étant agencé et conçu de manière à ce que l'obturation de l'ouverture pour générateur de gaz (3) soit assurée par l'au moins un élément tissé (5, 11, 12), pendant et/ou après le déploiement du sac de gaz au niveau du générateur de gaz (1) et/ou de la connexion électrique (4, 10, 20), le générateur de gaz (1) étant disposé, lorsque le sac de gaz (2) est plié, dans l'ouverture pour générateur de gaz (3) et une partie (1a) est saillante du sac de gaz (2), et la connexion électrique (4, 10, 20) du générateur de gaz (1) est prévue sur la partie (1a) du générateur de gaz (1) se trouvant hors du sac de gaz (2),
**caractérisé en ce que**
l'au moins un élément tissé (5, 11, 12) recouvrant l'ouverture pour générateur de gaz (3) est conçu de manière à ce qu'il ferme l'ouverture pour générateur de gaz (3) derrière le générateur de gaz (1), pendant et/ou après le déploiement du sac de gaz (2), de sorte que le générateur de gaz (1) se trouve complètement dans le sac de gaz (2).

2. Module d'airbag selon la revendication 1, **caractérisé en ce que** l'au moins un élément tissé recouvrant l'ouverture pour générateur de gaz (3) est conçu de manière à ce qu'il s'applique sur la connexion électrique pendant et/ou après le déploiement du sac de gaz (2).

3. Module d'airbag selon l'une quelconque des revendications 1 ou 2, **caractérisé en ce que** le sac de gaz (2) au niveau de l'ouverture pour générateur de gaz (3) et/ou un connecteur de raccordement (20) pour relier un câble de raccordement (10) au générateur de gaz (1) sont conçus de manière à ce que le connecteur de raccordement (20) soit retiré du générateur de gaz (1) pendant le déploiement du sac de gaz (2), de sorte que l'au moins un élément tissé (15, 16) ferme le sac de gaz (2) sans composant intermédiaire.

4. Module d'airbag selon la revendication 3, **caractérisé en ce que** le connecteur de raccordement (20) est conçu de manière à ce qu'il soit saillant au-dessus du diamètre du générateur de gaz (2) et que le sac de gaz (2) présente un renforcement annulaire (19) au niveau de l'ouverture pour générateur de gaz (3).

5. Module d'airbag selon l'une quelconque des précédentes revendications, **caractérisé en ce que** sont prévus deux élément tissés (11, 12) se chevauchant, recouvrant l'ouverture pour générateur de gaz (3).

6. Module d'airbag selon l'une quelconque des précédentes revendications, **caractérisé en ce qu'**est prévu comme générateur de gaz, un générateur de gaz tubulaire (1) qui présente la connexion électrique (4, 10, 20) sur une face d'extrémité.
